Europäisches Patentamt

European Patent Office

Office européen des brevets

(19)

(11) Veröffentlichungsnummer: **0 032 982**
**B1**

(12) **EUROPÄISCHE PATENTSCHRIFT**

(45) Veröffentlichungstag der Patentschrift:
20.03.85

(21) Anmeldenummer: 80107067.3

(22) Anmeldetag: 14.11.80

(51) Int. Cl.⁴: **H 04 M 9/02, H 04 M 11/04**

(54) Hausanlage zur Übertragung von Informationen und Verwendung der Anlage als Haussprechanlage oder zum Auslösen eines Alarms.

(30) Priorität: 15.11.79 DE 2946177

(43) Veröffentlichungstag der Anmeldung:
05.08.81 Patentblatt 81/31

(45) Bekanntmachung des Hinweises auf die Patenterteilung:
20.03.85 Patentblatt 85/12

(84) Benannte Vertragsstaaten:
AT BE CH FR GB IT LI NL SE

(56) Entgegenhaltungen:
AT - B - 246 615
DE - A - 2 435 345
DE - A - 2 528 854
DE - A - 2 734 705
DE - A - 2 741 000
DE - B - 2 547 188
DE - B - 2 812 725
DE - C - 2 607 494
GB - A - 2 015 850
US - A - 4 097 690

Elektronik, 1976, H. 10, S. 52-56; Elektronik, 1976, H. 11, S. 83-87
Einführung in die Fernsprechtechnik, 1. Teil: "Ortsämter mit Wählbetrieb", Dipl. Ing. R. Krause, 4. Aufl. 1958, Verlag Erich Herzog, Goslar

(73) Patentinhaber: S. Siedle & Söhne Telefon- und Telegrafenwerke Gesellschaft mit beschränkter Haftung, Bregstrasse 1, D-7743 Furtwangen (DE)

(72) Erfinder: Duffner, Otto, Schwarzenbach 8, D-7741 Schönwald (DE)

(74) Vertreter: Baumann, Eduard, Dipl.-Phys., Postfach 1201 Sattlerstrasse 1, D-8011 Höhenkirchen/München (DE)

# Beschreibung

Die Erfindung bezieht sich auf eine Hausanlage zur Übertragung von Informationen gemäss dem Oberbegriff des Anspruches 1, sowie auf die Verwendung der Anlage als Haussprechanlage oder zum Auslösen eines Alarms gemäss Anspruch 12 beziehungsweise 13.

Eine derartige Anlage ist aus der DE-OS 2 528 854 bekannt. Bei einem Ausführungsbeispiel dieser Druckschrift ist die Parallelanordnung einzelner (Haupt-) Apparate vorgesehen, bei einem anderen Ausführungsbeispiel sind bestimmte Schaltungen sowie eine Zentraleinheit beschrieben. Für jeden Apparat ist eine eigene Stromversorgung vorgesehen. Für die Synchronisation ist ein ebenfalls aus der Stromversorgung entnommenes 50 Hz-Signal vorgesehen. Die Anlage arbeitet als reines Wechselsprech-Verkehrssystem beziehungsweise als Wechselsprechanlage. Zu einer bestimmten Zeit ist nur ein einziges Gespräch möglich, gleichzeitig sind dann alle übrigen Teilnehmer blockiert. Diese können dann auch keine anderen Funktionen, wie den Türöffner, den Klingelknopf usw. betätigen. Dadurch ist nur ein sehr beschränkter Anwendungsbereich möglich. Wollten zwei Teilnehmer einlängeres Gespräch miteinander führen, so wäre es daher nicht möglich, dass ein weiterer Hausbesucher durch Klingelknopf auf sich aufmerksam macht, und es wäre auch dem Besuchten nicht möglich, den Besucher durch Betätigen des Türöffners hereinzulassen. Selbstverständlich ist mit einer derartigen einfachen Anlage auch keine Übertragung irgendwelcher Daten, und insbesondere keiner beliebig kodierter Daten möglich. Die Kopplungselemente in Form des Übertragers sowie von zwei Transistoren begrenzen das Übertragungsmedium auf eine einzige Leitung. Weiter ist dort vorgesehen, dass das Übertragungstor und das Empfangstor ein- oder abgeschaltet wird, um den Apparat zum Übertragen oder zum Aufnehmen in Abhängigkeit von den eingehenden Signalen oder entsprechend von den ausgehenden Signalen abzuschliessen. Nach Herstellen der jeweiligen Verbindung soll jedes eingehende oder ausgehende Signal nicht den Zustand der Tore ändern, als das Primärsignal vorhanden ist. Alle Stellen werden auf unwirksam geschaltet, wenn die Leitung mit Impulsen besetzt ist. Wie erähnt, können dadurch zusätzliche Informationen wie z.B. Fühlerzustände usw. nicht erfasst und über den Steuerkanal übertragen werden. Eine Speicherung von Informationen, z.B. über eine erfolgte Teilnehmeranwahl, ist nicht möglich. Desgleichen ist es nicht möglich, Teilnehmeradressen unabhängig von geführten Gesprächen abzulesen. Da nur eine einzige Übertragungsleitung vorgesehen ist, ist selbstverständlich auch kein Selektionselement vorgesehen, um einen freien Übertragungskanal zu wählen.

Aus Elektronik, 1976, Heft 10, Seiten 52 bis 56 und Heft 11, Seiten 83 bis 87, werden Vorschläge zur Realisierung von integrierten Schaltungen gemacht, jedoch ohne auf die spezielle Problematik von Hausanlagen mit Telefonapparat wie Übertragungsleitung, Teilnehmerstellen und Türstation einzugehen. Auch die Kombination spezieller Schaltkreise für einen bestimmten Einsatzzweck ist nicht vorgesehen.

Der Erfindung liegt die Aufgabe zugrunde, eine Hausanlage gemäss dem Oberbegriff des Anspruches 1 so auszubilden, dass eine gleichzeitige Übertragung von Daten oder Führung von Gesprächen, oder Betätigung von Einrichtungen wie Türklingeln, Türöffner, Alarmanlage möglich ist.

Die Aufgabe wird erfindungsgemäss durch die Merkmale des Kennzeichens des Anspruches 1 gelöst. Weitere Ausgestaltungen der Erfindung sind in den Unteransprüchen dargestellt, wobei die Ansprüche 13 beziehungsweise 14 die Verwendung als Haussprechanlage beziehungsweise eines Alarmgebers vorsehen.

Die vorgesehene hochintegrierte Schaltung und die erfindungsgemässe Kombination einzelner Schaltkreise und Schaltelemente sowie Koppelelemente ermöglicht eine vielseitige Anwendung und gleichzeitige Verwendung für mehrere Zwecke, ausser der gleichzeitgen Führung mehrerer Gespräche auch die Feststellung, Übertragung und Anzeige der Zustände von Fühlern oder Schaltelementen. Die Teilnehmeradressen können unabhängig von den geführten Gesprächen abgelesen werden. Es können die unterschiedlichsten Übertragungsmedien wie Koaxialkabel, Glasfaser oder auch drahtlose Funkstrecken verwendet werden. Gegebenenfalls abgesehen von einer zentralen Stromversorgung ist keine zentrale Einheit erforderlich, sämtliche Teilnehmerstellen sind gleichberechtigt, und an allen Teilnehmerstellen liegen gleichzeitig alle Informationen an. Das Übertragungsgeheimnis wird dadurch gewahrt, dass nur der Teilnehmer die Information erhält, dessen Adresse in der Information mitenthalten ist. Es ist eine Signalübertragung in beiden Richtungen möglich, ausser der zum Betrieb einer Sprechanlage gehörenden Information sind beliebige andere digitale und kodierte Informationen für die Übertragung geeignet. Der Aufbau und die Installation einer Hausanlage werden stark vereinfacht, eine derartige Anlage kann auch nachträglich einfach und praktisch installiert werden, sie ist praktisch beliebig erweiterbar.

Ein automatisch wirkendes Selektionselement prüft das Übertragungsmedium selbsttätig und wählt einen freien Übertragungskanal aus.

An jeder Teilnehmerstelle ist eine im wesentlichen identisch aufgebaute hochintegrierte Schaltung, insbesondere ein Mikrocomputer vorgesehen, an welche die Einzelnen gewünschten Funktionsblöcke wie Ruftastatur, Zustandsfühler usw. angeschlossen haben. Diese hochintegrierten Schaltungen jeder Teilnehmerstelle sind über ein einziges Übertragungsmedium wie eine elektrische Leitung unter Zwischenschaltung von Kopplungselementen wie ein RC-Glied oder einen Wandler miteinander verbunden. Sie können von aussen durch Anfügen elektrischer Verknpüfungsbauteile wie Kurzschlussbrücken, Dioden oder Kodierschalter den einzelnen Funktionen der jeweiligen Teilnehmerstellen entsprechend programmiert werden. Auf diese Weise ist es möglich, Informationen zu verarbeiten, zu kodieren, über das Übertragungsmedium zu anderen Teilnehmerstellen zu senden, zu empfangen, zu dekodieren, auszuwerten und die einzelnen Einrichtungen der Anlage wie Torlaufsprecher, Türöffner, Wohnungsklingel, Schalter und dergleichen zu steuern.

Zweckmässigerweise kann in dem einzigen Übertragungsmedium eine einzige Stromversorgungsleitung für die Stromversorgung der einzelnen Teilnehmerstellen vorgesehen sein. Desgleichen kann eine einzige gemeinsame Steuerleitung vorgesehen werden, welche die gesamten Informationen ausser der eigentlichen Sprachübertragung übertragen kann. Darunter fallen beispielsweise das Betätigen einer Sprechstelle SPS in einer Wohnung über eine Drucktaste oder ein Tastenfeld am Tor, was durch einen Besucher erfolgt. In gleicher Weise fallen darunter die Betätigung des Türöffners durch den Sprechstellenteilnehmer oder die Anzeige, dass die Tür offen oder geschlossen ist.

Für die eigentliche Sprachübertragung kann wenigstens eine Sprachübertragungsleitung vorgesehen werden. Es können jedoch auch mehrere Sprachübertragungsleitungen zusätzlich zu einer einzigen Steuerleitung und/oder einer einzigen Stromversorgungsleitung vorgesehen werden. Da aufgrund des Schaltungsaufbaues an jeder Sprechstalle die gesamte Information anliegt, die über diese gemeinsame Leitung übertragen wird, kann der Mikrocomputer jeder Teilnehmerstelle selbsttätig feststellen, welche Sprachübertragungsleitung gerade besetzt ist. Jede Teilnehmerstelle kann somit automatisch zur nächsten freien Sprachübertragungsleitung weiterschalten.

Um bei Bedarf auszuschliessen, dass eine nichtbetroffene Teilnehmerstelle ein Gespräch mithört, kann an jeder Teilnehmerstelle eine Sprerreinrichtung vorgesehen werden, welche bei Zustandkommen einer Kommunikationsverbindung die Verbindung zu einem Teil oder zu sämtlichen übrigen Teilnehmerstellen sperrt.

Wie weiter oben erwähnt, sind zwischen den hochintegrierten Schaltungen, im allgemeinen Mikrocomputer, und den Übertragungsleitungen Kopplungselemente geschaltet. Diese empfangen entweder vom Mikrocomputer eine Impulsfolge mit Abständen entsprechend der zu übertragenden Steuerinformation und geben eine Frequenzfolge entsprechend den unterschiedlichen Impulsintervallen an die Steuerleitung weiter, oder sie wandeln die von der Steuerleitung erhaltene Frequenzfolge in eine entsprechende Impulsfolge um und übertragen diese an den Mikrocomputer.

Es kann weiterhin ein Sprechweg-Selektionselement zwischen Mikrocomputer und die Sprachübertragungsleitungen geschaltet werden, das die Aufgabe hat, aufgrund von vom Mikrocomputer herrührenden Steuerimpulsen eine freie Sprachübertragunsleitung (falls mehrere Sprachübertragungsleitungen vorgesehen sind) oder eine bestimmte Trägerfrequenz für die betreffende Sprachübertragungsleitung zu selektieren. Die letztere Einrichtung gestattet die gleichzeitige Übertragung mehrerer Gespräche auf einer einzigen Leitung.

Darüber hinaus kann ein bestimmtes Signalgerät vorgesehen sein, das ebenfalls mit dem Mikrocomputer schaltungsmässig verbunden ist und von diesem eine Impulsfolge erhält, die einen bestimmten Funktionszustand bezeichnet. Aufgrund dieser Impulsfolge kann das Signalgerät eine entsprechende Signalanzeige, wie ein akustisches oder optisches Signal, im Signalgerät auslösen.

Die Anlage kann darüber hinaus eine Schalteranordnung für periphere Geräte vorsehen. Diese Schalteranordnung kann dadurch aufgrund einer vom Mikrocomputer herrührenden Impulsfolge diese peripheren Geräte auslösen. Dabei ist beispielsweise an die Auslösung einer Vielzahl von Alarmeinrichtungen innerhalb einer Fabrikanlage, an ein Auslösen einer Vielzahl von Arbeitsbeginn-, Pausen- oder Arbeitsbeendigungssignalen oder dergleichen zu denken. In einem weiteren Ausführungsbeispiel der Erfindung kann jeder Teilnehmerstelle ein mit dem Mikrocomputer schaltungsmässig verbundenes Kodierelement zugeordnet werden. Dieses Kodierelement kann zum ersten so eingestellt werden, dass sie die zugehörige Teilnenmerstelle bezeichnet. Zum anderen kann durch Einstellen dieses Kodierelementes festgelegt werden, welche Funktionen die betreffende Teilnehmerstelle, die ja im Grundaufbau mit allen übrigen Teilnehmerstellen gleich ist, übernehmen soll. Beispielsweise können so die unterschiedlichen Funktionen einer Torsprechstelle und einer Wohnungssprechstelle eingestellt werden. Dieses Einstellen oder Kodieren oder Programmieren erfolgt im allgemeinen über elektrische Verknüpfungsbauteile.

Als weiterer Bestandteil kann jede Teilnehmerstelle einen Schalterblock enthalten, der mit den einzelnen Funktionselementen der bestimmten Sprechstelle wie Tasten, Türzustandsfühler usw. verbunden ist und an den Mikrocomputer beim Auslösen der entsprechenden Funktionselemente entsprechende Steuer- und Informationssignale liefert.

Eine bevorzugte Anwendung der erfindungsgemässen Anlage erfolgt als Haussprechanlage mit mehreren Sprechstellen und vorzugsweise wenigstens einem Torlautsprecher. Eine weitere oder zusätzliche Verwendung der Anlage besteht darin, einen Alarm in Zusammenwirkung mit einem Fühler zu erzeugen, um zentralgesteuert eine Vielzahl von einzelnen Einrichtungen zu betätigen, beispielsweise, um ein Dienstbeginn-, Pausen- oder Dientschlusszeichen oder dergleichen auszulösen.

Der Betrieb der erfindungsgemässen Anlage erfolgt unabhängig von einer Zentrale. Die Anlage ist jederzeit und beliebig erweiterbar, wobei lediglich eine neue Standardschaltung mit dem Übertragungsmedium, im allgemeinen eine oder mehrere elektrische Leitungen, verbunden werden muss. Dadurch wird die Installation und insbesondere die nachträgliche Installation sehr einfach. Bei bisherigen bekannten Anlagen, welche ohne Zentrale auskommen wollen, wäre dagegen bei einer Erweiterung der Anlage eine Unzahl von Verbindungsleitungen notwendig, um den neu hinzugekommennen Teilnehmer mit sämtlichen anderen Teilnehmern zu verbinden.

Falls man im einzigen Übertragungsmedium eine für alle Teilnehmer zuständige Stromversorgungsleitung einführt, erspart man sich die Notwendigkeit, an jeder Teilnehmerstelle einen eigenen Stromversorgungsanschluss zu schaffen.

Das Trennen der Sprachübertragungsleitung von der Steuerleitung ermöglicht ein Auslösen sämtlicher anderer Funktionen während eines Telefongespräches, beispielsweise das Öffnen eines Tores, die Anzeige des geöffneten Tores usw.

Die Anlage gemäss der Erfindung kann zur Übertragung beliebiger kodierter Information verwendet werden, beispielsweise auch zum Auslösen vieler Steuer- und Schaltfunktionen in der Haustechnik, beispielsweise dem Aus- und Einschalten sowie dem Umschalten von Herden und Kochplatten, Kühlschränken, Klimaanlagen. Auch eine Aufzeichnung von Informationen auf Schreibern, Auswertegeräten oder Bildschirmen ist möglich.

Anhand der Zeichnung sollen Ausführungsbeispiele der Erfindung erläutert werden. Es zeigt:

Fig. 1 ein Gesamtschema einer Haussprechanlage mit mehreren Sprechstellen und Torlautsprechern sowie einem Netzgerät,

Fig. 2a das Flussdiagramm einer Informationsübermittlung,

Fig. 2b das Flussdiagramm eines Informationsempfanges,

Fig. 2c eine typische Impulsfolge bei der Informationsübermittlung,

Fig. 3 das Blockschaltbild einer Teilnehmerstelle,

Fig. 4a eine Schaltungsanordnung für eine Torsprechstelle,

Fig. 4b eine Schaltungsanordnung für eine Wohnungs-Sprechstelle.

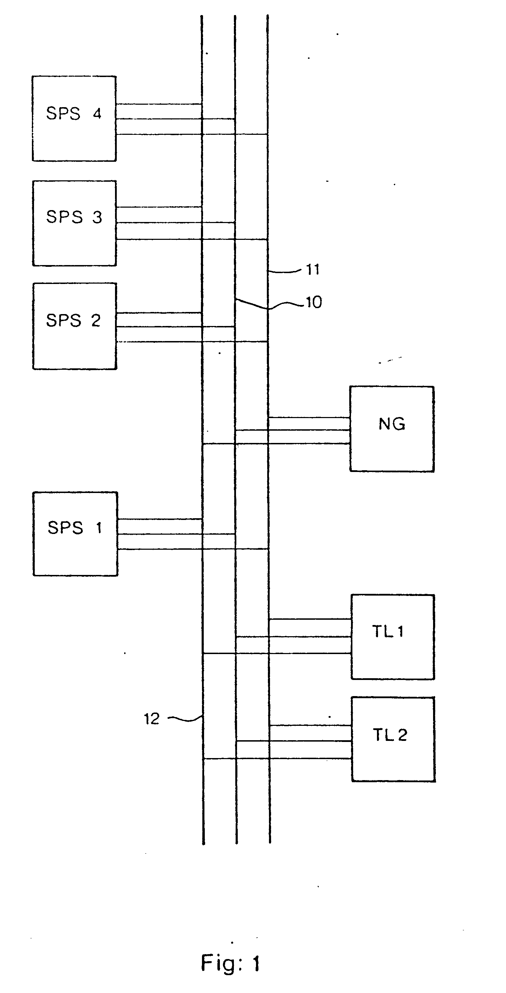

In Fig. 1 ist eine Haussprechanlage mit zwei sogenannten Torlautsprechern TL1 und TL2 sowie vier Sprechstellen SPS1–SPS4 dargestellt. Darüber hinaus ist ein Netzgerät NG dargestellt, das über eine gemeinsame Stromversorgungsleitung 11 mit jeder Teilnehmerstelle verbunden ist. Ausserdem ist zwischen sämtlichen Teilnehmerstellen, welche die Sprechstellen und die Torlautsprecher umfassen, eine gemeinsame Sprachübertragungsleitung 10 vorgesehen. Darüber hinaus ist eine eigene Steuerleitung 12 dargestellt, die ebenfalls mit sämtlichen Teilnehmerstellen verbunden ist.

Der Torlaufsprecher besteht im allgemeinen aus einem Druckknopf in Verbindung mit einem Namensschild oder einem Tastenfeld zur Eingabe der gewünschten Teilnehmernummer, wobei jedem Teilnehmer eine ihm gehörige Rufnummer zugeordnet ist, die einem Verzeichnis, zum Beispiel neben dem Tastenfeld, zu entnehmen ist, einem Mikrofon und einem Lautsprecher. Bei Betätigen des Druckknopfes oder bei Eingabe einer Rufnummer über das Tastenfeld ertönt in üblicher Weise an der gewählten Sprechstelle ein Klingelzeichen. Durch Annahme des Rufes, was über ein Schalterelement dem Schaltkreis angezeigt wird, erfolgt die Zusammenschaltung zu einer Sprechverbindung zwischen der Sprechstelle und dem Torlaufsprecher, beispielsweise TL1, wobei selbstverständlich auch die Sprechstelle, beispielsweise SPS, ein Mikrofon und einen Lautsprecher aufweist. Diese Sprechverbindung wird über die gemeinsame Sprachübertragungsleitung 10 durchgeführt. Will der Teilnehmer der Sprechstelle den am Torlaufsprechern TL1 wartenden Besucher hereinlassen, so drückt er den Toröffnungsknopf. Dadurch erzeugt die ingetrierte Schaltung, im allgemeinen ein Mikrocomputer, eine kodierte Information, die über die Steuerleitung der Torlautsprecher-Stelle übermittelt wird und diese zur Ansteuerung des Toröffnerschaltkreises veranlasst.

Mit der gezeigten Anlage ist es auch möglich, dass sich beisielsweise über die Sprechübertragungsleitung 10 zwei Sprechstellen SPS1 und SPS2 miteinander unterhalten, während dennoch der Steuerweg 12 für eine Kontaktaufnahme zwischen einem Torlaufsprechern 1 und einer weiteren Sprechstelle frei ist.

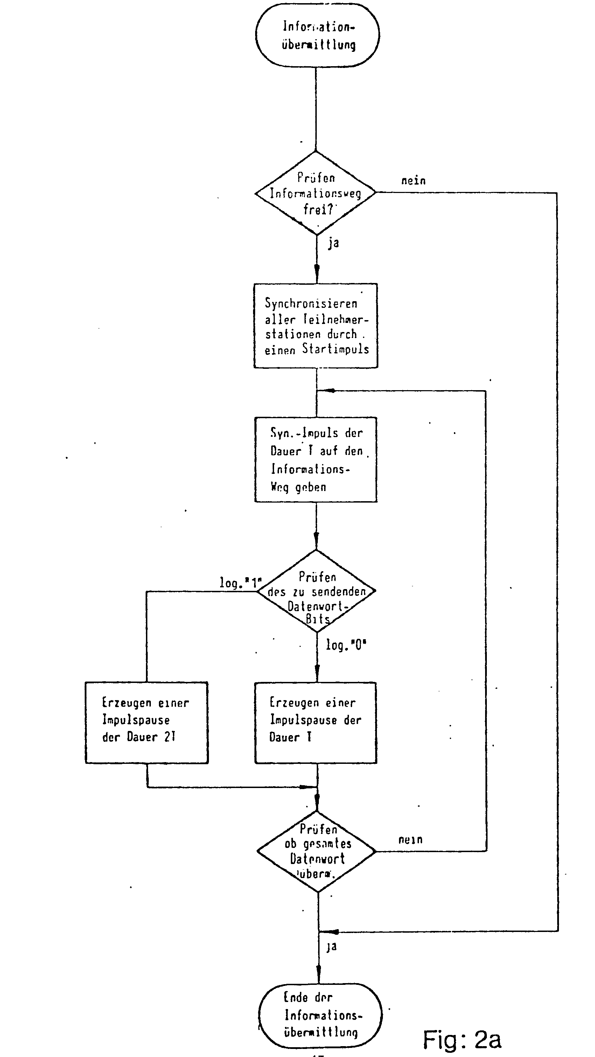

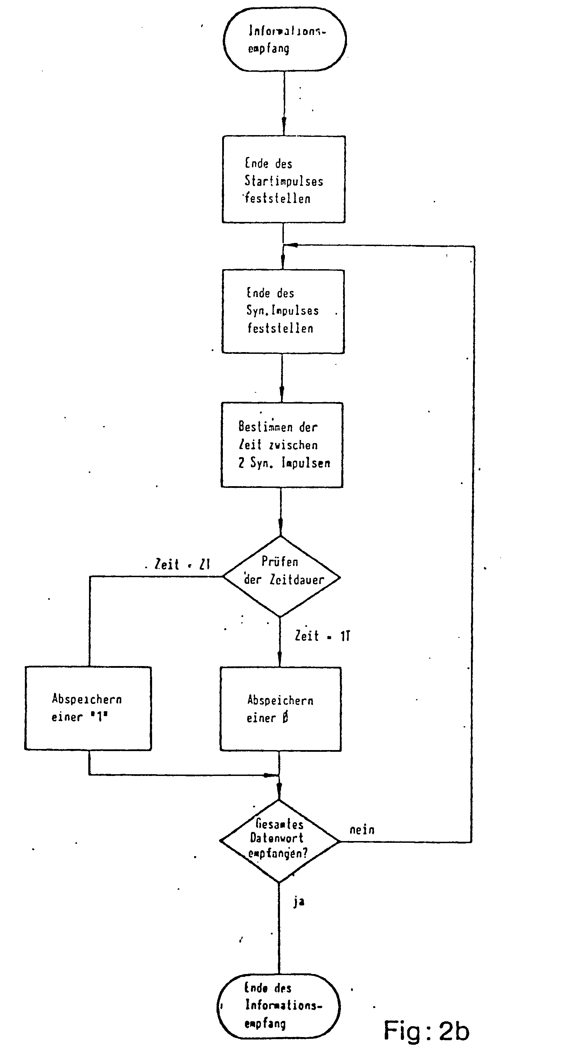

Fig. 2a und Fig. 2b zeigen je ein Flussdiagramm für die Informations- bzw. Datenwortübertragung. Dabei sind in Fig. 2a die einzelnen in der hoch integrierten oder LSI-Schaltung innerhalb einer Teilnehmerstelle ablaufenden Vorgänge für die Sendung einer Information, in Fig. 2b die entsprechenden Vorgänge für den Empfang einer derartigen Information dargestellt.

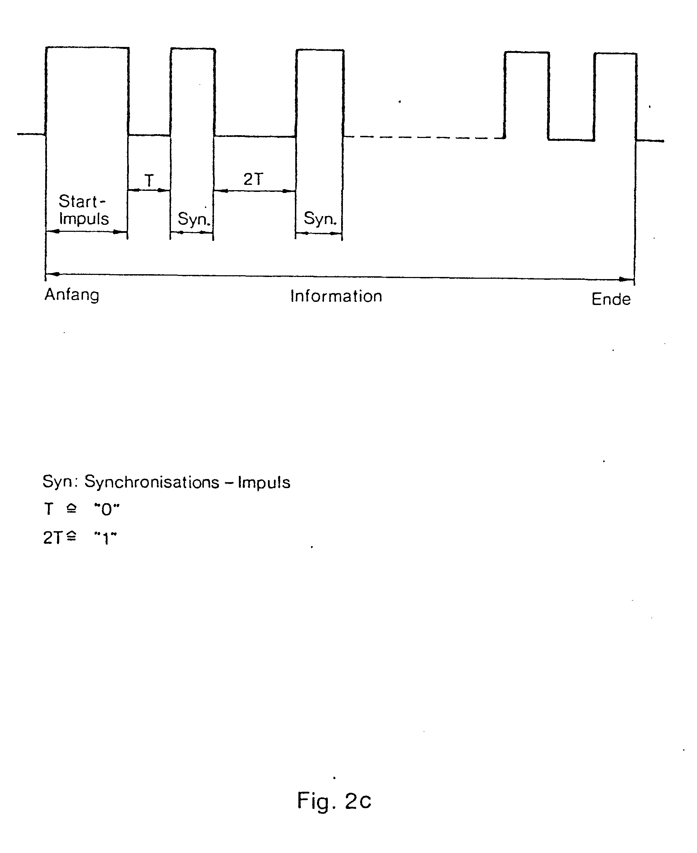

Fig. 2c zeigt die zeitlich ablaufende Impulsfolge während der Informationsübermittlung. Es handelt sich dabei um ein serielles Senden (Fig. 2a) und serielles Empfangen des Datenwortes (Fig. 2b).

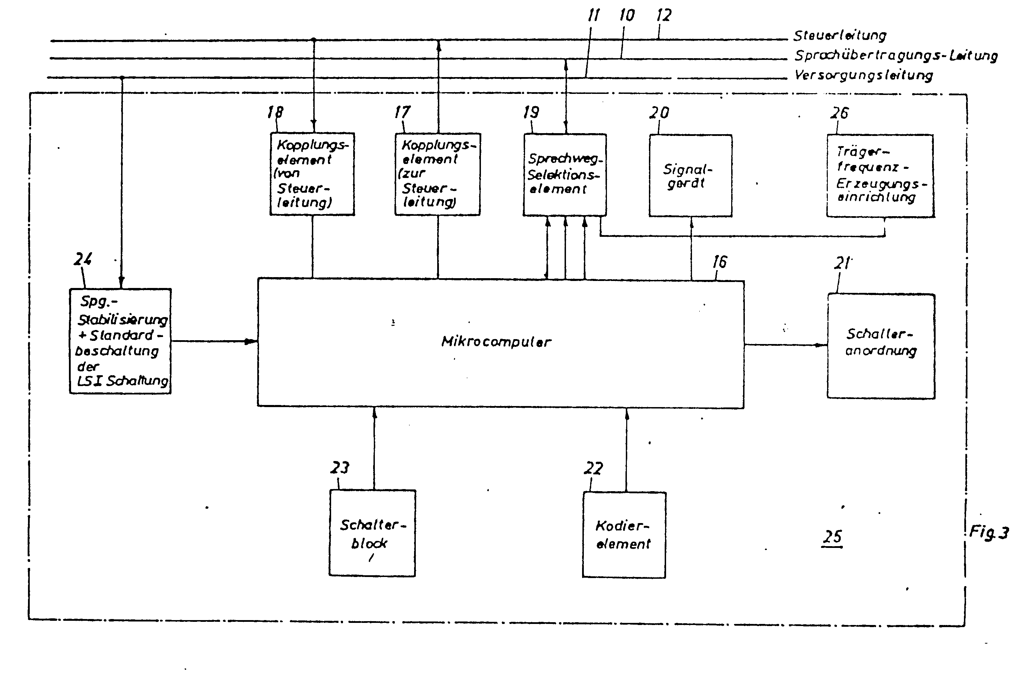

In Fig. 3 ist ein Blockschaltbild einer Teilnehmerstelle dargestellt, die allgemein mit 25 bezeichnet ist. Diese Sprechstelle SPS ist mit je einer Steuerleitung 12, einer Sprachübertragungsleitung 10 und einer Versorgungsleitung 11 verbunden. Den Mittelpunkt der Sprechstelle bildet ein Mikrocomputer 16. Dieser Mikrocomputer steht über ein Kopplungselement 17 (von Steuerleitung) und 18 (zur Steuerleitung) mit der Steuerleitung 12 in Verbindung. Desweiteren steht der Mikrocomputer 16 über ein Sprechwegselektionselement 19 mit der Sprachübertragungsleitung 10 in Verbindung. Dieses Sprechwegselektionselement 19 steht im übrigen mit einer Trägerfrequenz-Erzeugungseinrichtung 26 in Verbindung, in welcher eine Trägerfrequenz für die gleichzeitige Übertragung mehrerer Gespräche auf einer einzigen Sprachübertragungsleitung erzeugt wird, die vom Sprechwegselektionselement in geeigneter Weise ausgewählt wird.

Der Mikrocomputer 16 steuert unter anderem auch eine Schalteranordnung 21 an, über welche periphere Geräte wie mehrere dezentral angeordnete Alarmeinrichtungen usw. angesteuert werden können.

Ein ausserdem mit dem Mikrocomputer 16 schaltungsmässig verbundenes Kodierelement 22 dient zum Kodieren der betreffenden Sprechstelle. Desweiteren ist ein mit dem Mikrocomputer 16 verbundener Schalterblock 23 dargesellt, der insbesondere ein Tastenfeld bzw. ein Fühlerfeld enthält, um die Betätigung der Tasten und das Anwählen des gewünschten Teilnehmers zu ermöglichen. Darüber hinaus ermöglicht das Fühlerfeld des Schalterblocks die Feststellung des augenblicklichen Zustandes der Sprechstelle, beispielsweise die Anzeige, ob das Tor offen oder geschlossen ist.

Schliesslich ist in Fig. 3 eine Einrichtung 24 dargestellt, welche eine Spannungsstabilisierung sowie eine Standardbeschaltung der LSI-Schaltung enthält. Eine Spannungsstabilisierung ist zur sicheren Steuerung der einzelnen komplizierten Vorgänge innerhalb der Sprechstelle erforderlich. Die Standardbeschaltung soll diejenigen Funktionen umfassen, die jeder Sprechstelle gemeinsam sind. Diese Standardbeschaltung kann selbstverständlich auch bereits im Mikrocomputer selbst integriert sein, kann dann jedoch kaum mehr abgeändert oder durch eine andere Standardbeschaltung ersetzt werden. Insbesondere sind in der Standardbeschaltung ein Taktgenerator und eine Rückstellschaltung enthalten.

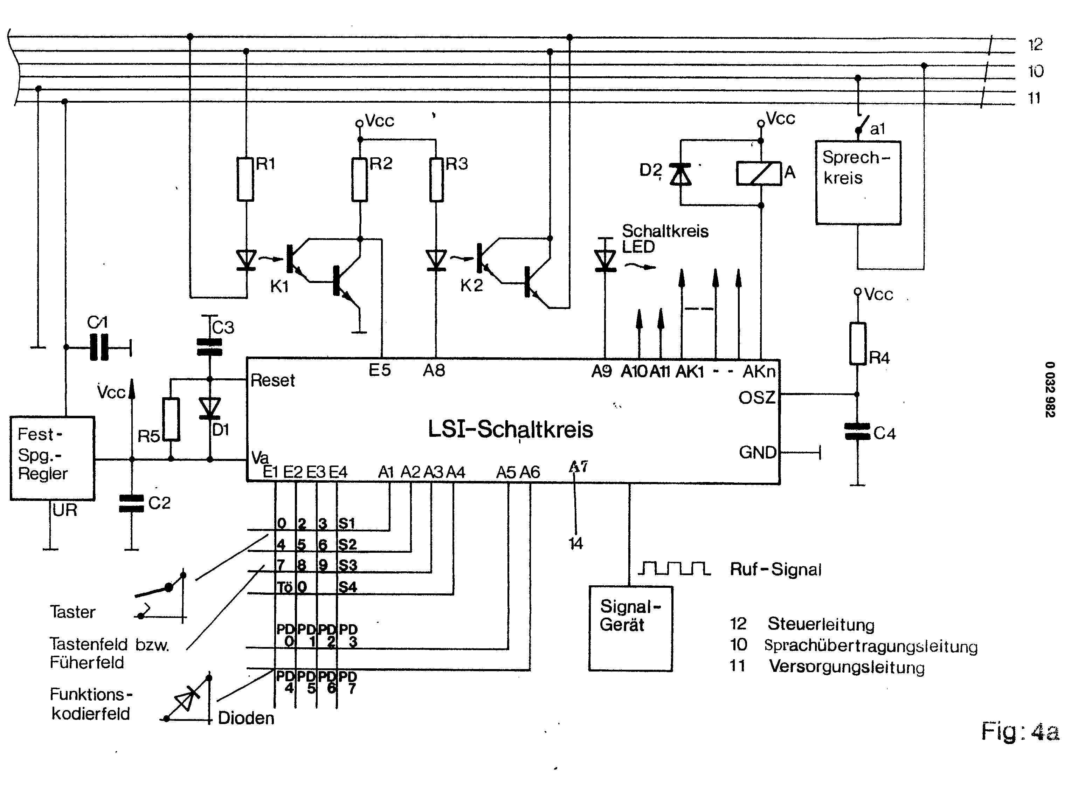

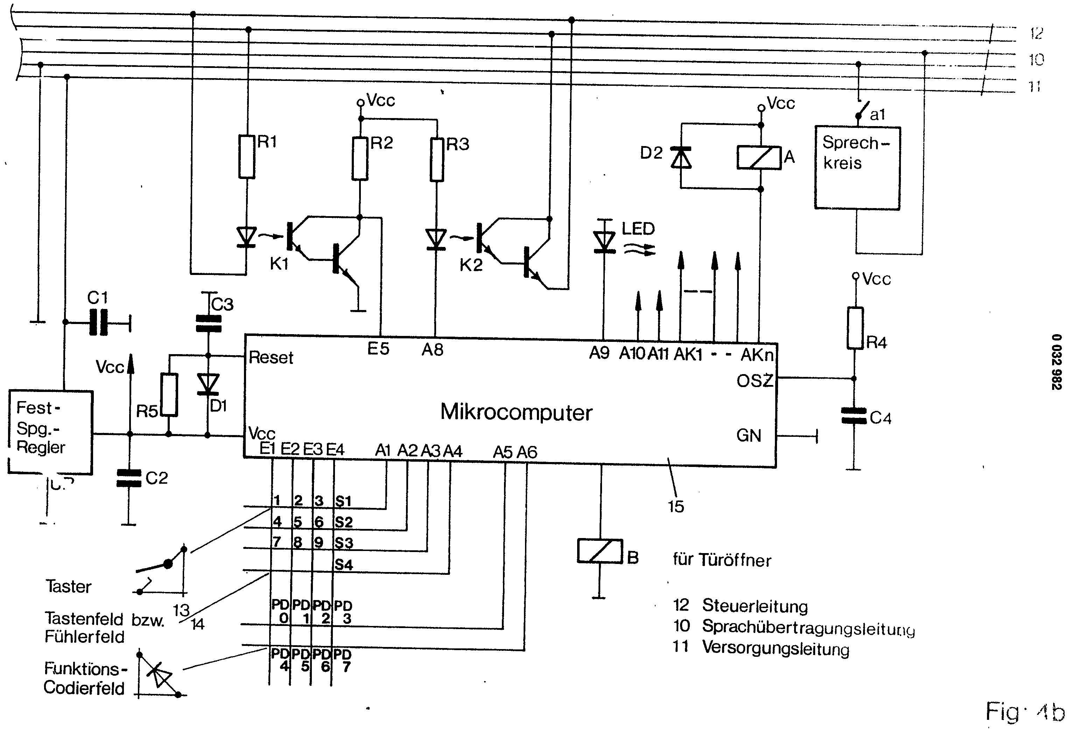

In Fig. 4a ist eine bevorzugte Schaltung für eine Torlautsprecherstelle dargestellt, wobei der Grundaufbau mit dem in Fig. 3 dargestellten Blockschaltbild übereinstimmt. Einem Mikrocomputer 14 wird über einen Festspannungsregler durch die Versorgungsleitung 11 Strom zugeführt. Die einzelnen Funktionseinheiten, wie die Ruf-Wähltastatur, das Mikrofon, der Lautsprecher, der Türöffner usw. sind mit dem Mikrocomputer 14 schaltungsmässig verbunden. Auch ein Fühler ist vorgesehen, der den Offen- oder Geschlossenzustand des Tores an der mit der Torsprechstelle verbundenen Wohnungssprechstelle angibt, beispielsweise durch Aufleuchten oder Blinken einer Lampe.

An der Torsprechstelle kann andererseits über einen LED-Schaltkreis eine Besetzanzeige angeordnet werden. Dadurch kann dem Besucher die Information übermittelt werden, dass die betreffende Sprechstelle gerade ein Haus-Telefongespräch führt, und das Betätigen der Ruf-Wähltastatur nach einiger Zeit wiederholen.

In Fig. 4b ist eine zweckmässige Schaltung für eine Sprechstelle dargestellt. Ein Vergleich mit der Schaltung von Fig. 4a für eine Torsprechstelle zeigt eine weitgehende Übereinstimmung des Aufbaues. Auch hier bildet den Mittelpunkt eine LSI-Schaltung, mit welcher über einen Festspannungsregler die Versorgungsleitung 11 verbunden ist. Mit der LSI-Schaltung sind andererseits sämtliche übrigen Aggregate, wie das Tastenfeld zur Wahl der einzelnen Teilnehmerstellen, der Lautsprecheranschluss, das Mikrofon, die Torzustandsanzeige, die Betätigung des Türöffners usw. verbunden.

Je nach speziellem Anwendungsgebiet können die in Fig. 4a und 4b dargestellten Schaltungen erheblich variiert werden, insbesondere können eine Vielzahl anderer Geräte an die zentrale LSI-Schaltung angebunden werden, wie ein Anzeigeschirm, ein Datenaufzeichnungsgerät usw. Die Hausanlage gemäss der Erfindung ist somit für eine Reihe unterschiedlicher Anwendungen auslegungsfähig.

Im folgenden wird eine Funktionsbeschreibung eines Ausführungsbeispieles der Erfindung gemacht, die sich im wesentlichen auf die Fig. 4a und 4b stützt.

Durch das in der LSI-Schaltung (im folgenden LSI-Schaltkreis) integrierte Steuerprogramm wird das Tasten- und Schalterfeld zyklisch (über A1/E1, A2/E2, A3/E3, A4/E4) auf eine Schalter- bzw. Tastenbetätigung abgefragt. Ist eine Betätigung erkannt, erfasst der LSI-Schaltkreis sämtliche Informationen, die z.B. über die Tasten eingegeben werden und speichert diese Information temporär im internen Arbeitsspeicher ab. Erfolgt innerhalb der Zeitspanne T kein erneuter Tastendruck, wird auf das Ende der Informations-Eingabe erkannt. Diese eingegebene Information ist in diesem Beispiel die Rufnummer der zu rufenden SPS, kann jedoch auch eine Steuerinformation zum Schalten eines Gerätes sein, welches z.B. mit einer anderen SPS schaltungstechnisch verbunden ist. Weiter ist es z.B. möglich, durch Fühler die Zustandsänderung eines Schaltelementes im Schalterfeld zu bewirken, dies zu erfassen und diese Information einer privilegierten Stelle zu übermitteln. Im folgenden entspricht die Bezeichnung Kommunikationsweg dem Sprachübertragungsweg. Da bei Inbetriebnahme der Anlage kein Kommunikations-Weg belegt sein kann, wird zu Beginn im internen Arbeitsspeicher ein Speicherplatz mit der Information «unbelegte Kommunikations-Wege» geladen (z.B. log. «0» für unbelegte Wege). Die Ausbaustufe mit Kommunikations-Wegen ist im Funktionskodierfeld (durch entsprechendes Beschalten von PD1, PD2 mit Dioden) programmierbar. Da jede Teilnehmerstelle laufend über den momentanen Belegt-Zustand der Kommunikations-Wege unterrichtet ist, kann nun mit Hilfe der obengenannten Information (Speicherplatz → Kommunikations-Wege-Belegung) ein freier Weg selektiert werden. Sollte kein Kommunikationsweg zur Verfügung stehen, wird das Signalgerät über A7 durch ein entsprechendes Steuerprogramm im LSI-Schaltkreis angeregt, um den Zustand der belegten Kommunikations-Wege dem Benutzer akustisch anzuzeigen. Ist ein Weg frei, erzeugt der Schaltkreis ein binäres Datenwort mit der Information, welcher Kommunikations-Weg benutzt werden soll, der eingegebenen Rufnummer, und dass der Verbindungsaufbau von einer Tor-Stelle gefordert wird.

Dieses binäre Datenwort wird seriell im Impulspausen-Modulations-Verfahren über das Koppelelement auf den Informationsweg gegeben. Das Verfahren ist aus Fig. 2a und 2c ersichtlich.

Im Ausführungsbeispiel ist dieses Übertragungsverfahren nach allgemein bekannter Art gelöst. A8 wird durch das Steuerprogramm abwechselnd und entsprechend der Information des Datenwortes von log. «1» auf log. «0» geschaltet. Dabei entspricht eine Impulspause der Zeitdauer T, einer log. «0» und die Impulspause der Zeitdauer 2T, einer log. «1». Jedes Bit des Datenwortes wird auf diese Weise in der oben aufgeführten Art auf den Informationsweg, hier auf die Informations-Ringleitung, gegeben.

Schaltungstechnisch geschieht dies durch das Opto-Koppelelement K2 in folgender Weise:

Wird A8 auf log. 0 geschaltet, fliesst durch $R_3$ und die Diode des Koppelelementes K2 ein Strom der Grösse

$$\frac{\text{Vcc-Diodenspg.}}{R3}$$

Dieser Strom verursacht das Schalten der Darlington-Stufe des Koppelelementes K2, hierdurch sinkt die Spannung zwischen den zwei Adern der Informations-Ringleitung nahezu auf die Sättigungs-Spannung der durchgeschalteten Darlington-Stufe ab.

Im zentralen Netzgerät erfolgt die Einspeisung der Spannung in die Informations-Ringleitung sowie die Begrenzung des Stromes, der durch die Adern und die Darlington-Schaltstufe fliesst. Über die Koppelelemente K1 gelangt die seriell von der Tor-Stelle gesendete Impulsfolge an die entsprechenden Eingänge E5 sämtlicher Teilnehmerstellen. Schaltungstechnisch geschieht dies folgendermassen: Durch R1 und die Diode des Opto-Koppelelementes K1 fliesst ein Strom in Abhängigkeit der Spannung zwischen den Adern der Informations-Ringleitung. Analog hierzu schaltet die Darlingtonstufe des Kopplers K1, und an E5 gelangt somit die von der Tor-Stelle übermittelte Impulsfolge.

Der Empfang der Impulsfolge erfolgt ebenfalls durch ein im LSI-Schaltkreis integriertes Steuerprogramm, dessen Ablauf aus Fig. 2b ersichtlich ist.

Die empfangene Information, die durch die zeitlich definierten Impulspausen T und 2T gekennzeichnet ist, wird nun innerhalb jeder Teilnehmerstelle (durch den LSI-Schaltkreis) in das ursprüngliche Datenwort, wie es in der Tor-Stelle vorliegt, dekodiert.

Jede Teilnehmerstelle wertet nun dieses Datenwort aus, und nur die SPS, deren Rufnummer im Datenwort angegeben ist und die im Funktionskodierfeld mittels Dioden, z.B. über $PD_3$–$PD_7$ festgelegt wurde, quittiert die Verbindungsforderung in Form eines Impulses, z.B. der Dauer T. Aufgrund dieses Quittungsimpulses erkennen alle Teilnehmerstellen den zuvor im Datenwort angegebenen Kommunikationsweg als belegt an, und nur die rufende Stelle, hier die Tor-Stelle, schaltet sich über das Schaltelement (durch Relais A) auf den ausgewählten Kommunikations-Weg (Kommunikations-Ringleitg.). Bleibt die Quittung aus, z.B. weil die angewählte Stelle bereits mit einer Stelle in Verbindung steht, registrieren alle Teilnehmerstellen den Kommunikations-Weg (Kommunikations-Ringleitung) als nicht belegt.

Die rufende Stelle kann diesen Zustand dem Benutzer mittels des Signalgerätes anzeigen oder, wie hier im Beispiel einer Tor-Stelle, über einen LED-Schaltkreis (durch programmgesteuertes Schalten des A9) signalisieren.

Ist die gerufene SPS nicht besetzt, generiert diese (ebenfalls programmgesteuert über A7) ein Rufsignal, das über das Signalgerät, z.B. ein akustischer Wandler, dem Benutzer angezeigt wird.

Nimmt der Benutzer den Ruf entgegen, was dem LSI-Schaltkreis durch das Betätigen eines Tasters oder eines sonstigen Schalters angezeigt wird, schaltet nun die gerufene SPS ihren Sprechkreis durch das entsprechende Schaltelement (hier über das Relais A) auf den Kommunikations-Weg (Kommunikations-Ringleitung) und ein Sprechverkehr ist über die beiden Sprechkreise und den Kommunikations-Weg möglich.

Während der Verbindung zur Tor-Stelle kann der Benutzer mittels einer Tastenbetätigung (durch TÖ-Taste) das Ansteuern eines Toröffner-Relais (Relais B) durch programmgesteuertes Schalten von A7 veranlassen, was der Tor-Stelle ebenfalls über ein Datenwort von der SPS mitgeteilt wird.

Nimmt der Benutzer innerhalb einer definierten Zeitspanne den Ruf nicht an, beendet die gerufene SPS die Erzeugung des Rufsignals. Damit der bereits von allen Teilnehmer-Stellen als belegt registrierte Kommunikations-Weg (Kommunikations-Ringleitung) wieder freigeschalet wird, sendet die gerufene SPS ein Datenwort über den Informations-Weg (Informations-Ringleitung) an alle angeschlossenen Teilnehmerstellen und bewirkt somit die Freischaltung des belegten Kommunikations-Weges. Derselbe Vorgang ergibt sich, wenn die Verbindung von einer Stelle (hier im Bsp. die SPS) abgebrochen wird, was dem LSI-Schaltkreis ebenfalls durch einen Taster oder eine sonstige Schalterbetätigung angezeigt wird.

Beide beteiligten Teilnehmerstellen kehren in die Ausgangsposition zurück und ein erneuter Verbindungsaufbau ist möglich. Im folgenden sollen noch einige Begriffe im Zusammenhang mit Fig. 4a und Fig. 4b näher erläutert werden.

Es sei zunächst erwähnt, dass die Standard-Beschaltung auch oder insbesondere einen Taktgenerator sowie ein Rückstellschaltwerk einschliesst, das für die Erzeugung und Verarbeitung der einzelnen Impulse und Frequenzfolgen notwendig ist. Als Übertragungsmedium 10, 12 können beispielsweise zwei Adern für die Steuerleitung und ausserdem zwei Adern für die Sprachübertragungsleitung vorgesehen werden, die in Form einer Ringleitung angeordnet sind. Als zweite Möglichkeit kann jedoch auch eine gemeinsame Ringleitung, beispielsweise ein Coaxialkabel vorgesehen werden. Hier besitzt sowohl der Steuer-«Weg» wie der Sprachübertragungs-«Weg» einen ihm zugeordneten Frequenzbereich der Bandbreite B, wobei mit $B_1$ die Bandbreite für den Steuerweg und mit $BK_n$ die Bandbreite für den Sprachübertragungsweg n bezeichnet ist. In diesem zweiten Falle sind die Kopplungselemente gemäss Fig. 2a und Fig. 2b sowie gemäss Fig. 3 in Form eines Modulators bzw. Demodulators ausgebildet, welche die Informationen in einen bestimmten Frequenzbereich modulieren bzw. von diesem demodulieren. Desgleichen werden im Falle einer gemeinsamen Ringleitung die Schaltelemente zur Sprachübertragungsleitung durch Modulations- bzw. Demodulationsbausteine ersetzt, die – durch den LSI-Schaltkreis paarweise angesteuert – den Zugriff auf den selektierten Sprachübertragungs-Weg der Bandbreite $BK_n$ für die berechtigten Teilnehmerstellen erlauben.

Mit UR ist ein Festspannungs-Regler zur Erzeugung einer geregelten Versorgungsspannung für die Teilnehmerschaltung (LSI-Schaltkreis, Schaltstufen, Signalgeräte usw.) bezeichnet. Mit C1 und C2 sind Siebkondensatoren bezeichnet. D1, C3 und R5 bilden ein Schaltwerk zum Rücksetzen des Schaltkreises beim Einschalten der Anlage. R4 und C4 bilden ein RC-Glied zur Erzeugung der Oszillator-Frequenz, mit welcher der Schaltkreis arbeitet. Mit A ist ein Reed-Relais bezeichnet. D2 bezeichnet eine Freilaufdiode, R1 und R3 dienen der Begrenzung des durch die Dioden der Koppler K1 und K2 fliessenden Stromes. R2 soll den durch den Kondensator des Koppelelementes K2 fliessenden Strom begrenzen. K1 und K2 stellen Opto-Koppler mit hohem Stromübertragungsverhältnis dar. LED dient der optischen Signalisierung des Tor-Zustandes. $PD_0$ bis $PD_7$ dienen der Funktionskodierung. Diese erfolgt durch das individuelle Beschalten der Kreuzungspunkte E1, E2, E3, E4/A5 und E1, E2, E3, E4 /A6. Die Kreuzungspunkte E1–E4 / A1–A4 dienen zum Abtasten der Wähltastatur und zur Abfrage von Fühlern bzw. Schaltelementen. Über den Ausgang A7 wird in Rechteckform ein Alarm- bzw. Rufsignal ausgegeben, welches durch den LSI-Schaltkreis bzw. durch ein entsprechendes Steuerprogramm erzeugt wird. Der Oszillator Osz dient in Verbindung mit R4, C4 zur internen Takterzeugung des Schaltkreises. Mit Vcc wird die positive Versorgungsspannung bezeichnet. Das Reset dient in Verbindung mit R5, C3, D1 zum definierten Starten des Steuerprogrammablaufes beim Einschalten der Anlage. Durch den Eingang E5 wird der Spannungspegel der Informationsringleitung über den Koppler K2 abgetastet. Der Ausgang A8 dient zur Ansteuerung des Kopplers K2 für die Steuersignalübertragung. Der Ausgang A9 dient der Ansteuerung des LED-Schaltkreises. Die Ausgänge A10 und A11 stehen zur freien Verfügung, beispielsweise für den Anschluss an die Zentrale angeordnete Alarmeinrichtungen. AK1 bis AKn dienen zur Ansteuerung der selektierten Sprachübertragungs-Leitung und sind beispielsweise in Form von Relais ausgebildet. Mit den Ziffern 0–9 ist eine Wahltastatur zur Eingabe der Rufnummer des Teilnehmers bezeichnet. TÖ bezeichnet eine Taste zum Auslösen eines Tor-Öffners. Ein Taster bzw. Schalter bezeichnet die Signalisierung der Rufannahme bzw. des Verbindungsabbruchs bezeichnet. S1 bis S4 sind Schalter bzw. ein Fühlerfeld für Alarmfunktionen usw.

Die obigen Ausführungen bezogen sich auf die in Fig. 4a dargestellte Wohnungs-Sprechstelle.

Bis auf die folgenden Ausnahmen gelten die gleichen Ausführungen für eine Torstelle gemäss Fig. 4b. In diesem Falle dient der Ausgang A7 der Ansteuerung des Tor-Öffner-Relais (Relais B), der Ausgang A9 dient der Ansteuerung des LED-Schaltkreises (Besetzt-Anzeige der gerufenen Sprechstelle SPS). Ein Türöffnertaster TÖ und ein Taster fehlen hier. Das Funktionskodierfeld ist der Funktion einer Torstelle entsprechend geschaltet.

Das Übertragunsmedium muss keineswegs aus einem elektrischen Leiter bestehen, vielmehr sind auch andere Übertragungsmedien denkbar, wie beispielsweise die modulierte· Lichtübertragung über Glasfaserleitungen.

## Patentansprüche

1. Hausanlage zur Übertragung von Informationen mit
a) mehreren miteinander ohne zentrale Vermittlung verbundenen Teilnehmerstellen (TL1, TL2; SP1–SP4),
b) einer elektrischen Stromversorgung,
c) der Parallelanordnung sämtlicher Teilnehmerstellen am Übertragungsmedium (10, 12),
d) welche Anlage so ausgebildet ist, dass an jeder Teilnehmestelle eine im wesentlichen identisch aufgebaute Schaltung (14, 15, 16) vorgesehen ist, an welche die einzelnen gewünschten Funktionsblöcke wie eine Wähltastatur oder technische äquivalente Wähleinrichtungen angeschlossen sind,
e) wobei diese Schaltungen über ein einziges Steuer-Übertragungsmedium (12) wie eine elektrische Leitung unter Zwischenschaltung von Kopplungselementen (17, 18) miteinander verbunden sind,
f) wobei die einzelnen Teilnehmerstellen ihren Funktionen entsprechend durch Anfügen elektrischer Kodierelemente (22) kodiert sind,
g) um durch die technischen Merkmale c) bis e) Informationen zu verarbeiten, zu kodieren, über das Übertragungsmedium zu anderen Teilnehmerstellen zu senden, zu empfangen, zu dekodieren, auszuwerten und die einzelnen Einrichtungen der Anlage wie Lautsprechern, Klingel, Schalter und dergleichen zu steuern,
gekennzeichnet durch
h) die Ausbildung der identisch aufgebauten Schaltung als hochintegrierte Schaltung (14, 15, 16) mit folgenden Schaltkreisen:
I. einem ersten Schaltkreis, um die Betätigung von Wähltasten oder den Zustand von Fühlern oder Schaltelementen festzustellen, die erhaltene Information zu kodieren, in eine entsprechende Impulsfolge umzuwandeln und zusammen mit der erhaltenen Tasteninformation entsprechende Steuerdaten an den Steuerkanal des Übertragungsmediums zu liefern,
II. einem zweiten Schaltkreis, um vom Steuerkanal (12) Impulsfolgen, welche Steuerinformationen enthalten, zu empfangen, auszuwerten, entsprechende Steuersignale für ein Kommunikationskanal-Selektionselement oder für Signalgeräte zu erzeugen,

III. einem dritten Schaltkreis, um aus den vom Steuerkanal (12) erhaltenen Impulsfolgen die Teilnehmeradressen abzulesen und auf Übereinstimmung mit der eigenen Adresse zu überprüfen,

   i) die Anordnung des Sprechweg-Selektionselementes (19) zwischen hochintegrierte Schaltung (14, 15, 16) und Übertragungsmedium (10),

   j) zwei zwischen Steuerleitung (12) und hochintegrierter Schaltung jeder Teilnehmerstelle gegenparallel geschaltete Kopplungselemente (17, 18) zur Übertragung von binärkodierten Steuersignalen,

   k) durch mehrere Sprechweg-Selektronskanäle (10) zusätzlich zu einem einzigen Steuerkanal (12), wobei jede Teilnehmerstelle bei Besetztsein des gewählten Sprechweg-Kanales (10) automatisch zum nächsten freien Sprechwegkanal weiterschaltet.

2. Hausanlage nach Anspruch 1, gekennzeichnet durch ein integriertes Steuerprogramm in der hochintegrierten Schaltung (14, 15, 16) jeder Teilnehmerstelle.

3. Hausanlage nach Anspruch 2, gekennzeichnet durch eine Standardbeschaltung (24) für die hochintegrierte Schaltung (14, 15, 16), die einen Taktgeber und eine Rückstellschaltung aufweist.

4. Hausanlage nach einem der Ansprüche 1–3, gekennzeichnet durch Einrichtungen an jeder Teilnehmerstelle zum Abtasten, zum Feststellen und zum Speichern des Status der Steuerleitung, der Wähltastatur und des Fühlerfeldes.

5. Anlage nach einem der Ansprüche 1–4, gekennzeichnet durch Sperreinrichtungen an jeder Teilnehmerstelle (TL1, TL2; SP1–SP4), welche bei Zustandekommen einer Kommunikationsverbindung die Verbindung zu einem Teil oder sämtlichen übrigen Teilnehmerstellen sperrt.

6. Anlage nach einem der Ansprüche 1–5, dadurch gekennzeichnet, dass die Kopplungselemente (17, 18), von der hochintegrierten Schaltung (14, 15, 16), vorzugsweise einem Mikrocomputer (14), eine Impulsfolge mit Abständen entsprechend der zu übertragenden Steuerinformation erhalten und eine getastete Frequenz entsprechend den unterschiedlichen Impulsintervallen an den Steuerkanal (12) übertragen bzw. in umgekehrter Reihenfolge die von dem Steuerkanal erhaltene getastete Frequenz in eine entsprechende Impulsfolge an die hochintegrierte Schaltung (14, 15, 16) übertragen.

7. Anlage nach einem der Ansprüche 1–6, gekennzeichnet durch ein Sprechweg-Selektionselement (19), das zwischen hochintegrierter Schaltung (14, 15, 16) und die Sprechwegkanäle (10) geschaltet ist und aufgrund von der hochintegrierten Schaltung herrührender Steuerimpulse eine freie Sprechwegleitung oder eine Trägerfrequenz selektiert.

8. Anlage nach einem der Ansprüche 1–7, dadurch gekennzeichnet, dass ein Signalgerät (20) vorgesehen ist, das von der hochintegrierten Schaltung eine Impulsfolge erhält, die einen bestimmten Funktionszustand wie ein geöffnetes Tor bezeichnet und eine entsprechende Signalanzeige, wie ein akustisches oder optisches Signal, im Signalgerät (20) auslöst.

9. Anlage nach einem der Ansprüche 1–8, gekennzeichnet durch eine Schalteranordnung (21) für periphere Geräte, die aufgrund einer von der hochintegrierten Schaltung (14, 15, 16) herrührenden Impulsfolge diese peripheren Geräte auslöst.

10. Anlage nach einem der Ansprüche 1–9, gekennzeichnet durch einen Rückkopplungsschaltkreis zwischen Sender-Kopplungselement (17) und Empfänger-Kopplungselement (18), derart, dass die vom Sender der hochintegrierten Schaltung (14, 15, 16) über das Sender-Kopplungselement (17) an den Steuerkanal gelieferte binär kodierte Steuerinformation über das Empfänger-Kopplungselement (18) als Rückkopplungssignal auch an den Empfänger der hochintegrierten Schaltung geliefert wird.

11. Anlage nach Anspruch 10, gekennzeichnet durch folgende Elemente des Rückkopplungsschaltkreises:

   a) eine Kurzschlussverbindung zwischen Sender-Kopplungselement (17) und Steuerleitung (12),

   b) einen mit der Steuerleitung (12) verbundenen opto-elektronischen Schaltkreis, der entsprechend dem Kurzschlusssignal ein optisches Signal an ein lichtempfindliches Element (K1) des Empfänger-Kopplungselementes (18) liefert, das ein entsprechendes Rückkopplungssignal an den Empfänger der hochintegrierten Schaltung (14, 15, 16) liefert.

12. Verwendung der Anlage nach einem der Ansprüche 1–11 als Haussprechanlage mit mehreren Sprechstellen und vorzugsweise wenigstens einem Torlautsprecher.

13. Verwendung der Anlage gemäss einem der Ansprüche 1–12 zum Auslösen eines Alarms in Zusammenwirkung mit einem Fühler zum Auslösen eines Dienstbeginns-, Pausen- oder Dienstschlusszeichens und dergleichen.

**Claims**

1. A domestic system for information transmission, comprising

   a) a plurality of subscriber's sets (TL1, TL2; SP1–SP4) interconnected without central exchange,

   b) an electric power supply,

   c) the parallel connection of all subscriber's sets to the transmitting medium (10, 12),

   d) which system is designed such that each subscriber's set is provided with a substantially identically configured circuit (14, 15, 16) to which the individual desired functional blocks such as dial keys or technically equivalent dialling means are connected,

   e) wherein these circuits are connected to each other via a single transmission control medium (12) with coupling elements (17, 18) being interconnected therebetween,

   f) wherein the individual subscriber's sets are encoded in accordance with their functions by added electric encoding means (22),

g) so that by means of the technical features c) to e) information may be processed, encoded, transmitted via the transmission medium to other subscriber's sets, received, decoded, evaluated, and the individual means of the system such as loudspeaker, bell, switches and the like may be controlled,
characterized in that

h) the identically configured circuit is designed as a large-scale integrated circuit arrangement (14, 15, 16) comprising the following circuits:

I. a first circuit for determining the actuation of dial keys or the state of sensors or switching elements, for encoding the received information, for converting the same to a corresponding pulse sequence, and for supplying corresponding control data together with the received key information to the control channel of the transmission medium,

II. a first circuit for receiving and evaluating pulse sequences containing control information from the control channel (12) and for generating corresponding control signals for a communication channel selection element or for signal devices,

III. a third circuit for reading from the pulse sequences received from the control channel (12) the subscriber's addresses and for checking the same for coincidence with the own address,

i) that the speechpath selection element (19) is disposed between the LSI-circuit (14, 15, 16) and the transmission medium (10),

j) that two coupling elements (17, 18) for transmitting binary-encoded control signals are connected in antiparallel relationship between control line (12) and LSI-circuit of each subscriber's set,

k) that a plurality of speechpath selection channels (10) is provided in addition to a single control channel (12), wherein, when the selected speechpath channel (10) is busy, each subscriber's set automatically effects transfer to the next free speechpath channel.

2. A domestic system as claimed in claim 1, charaterized by an integrated control programme in the LSI-circuit (14, 15, 16) of each subscriber's set.

3. A domestic system as claimed in claim 2, characterized by standard wiring (24) for the LSI-circuit (14, 15, 16), which includes a clock pulse generator and a restoring circuit.

4. A domestic system as claimed in any of the claims 1 to 3, characterized by means provided at each subscriber's set for sampling, detecting, and storing the status of the control line, the dial keys and the sensor field.

5. A system as claimed in any of the claims 1 to 4, characterized by blocking means provided at each subscriber's set (TL1, TL2; SP1–SP4) for blocking the connection to a part or all of the other subscriber's sets when a communication has been established.

6. A system as claimed in any of the claims 1 to 5, characterized in that the coupling elements (17, 18) are adapted to receive from the LSI-circuit (14, 15, 16), preferably a microcomputer (14), a pulse sequence with a spacing corresponding to the control information to be transmitted, and to transmit to the control channel (12) the keyed frequency in accordance with the different pulse intervals and, respectively, to transmit in reverse order the keyed frequency received from the control channel in a corresponding pulse sequence to the LSI-circuit (14, 15, 16).

7. A system as claimed in any of the claims 1 to 6, characterized by a speechpath selection element (19) which is connected between the LSI-circuit (14, 15, 16) and the speechpath channels (10) and which selects a free speechpath line or a carrier frequency in response to control pulses from the LSI-circuit.

8. A system as claimed in any of the claims 1 to 7, characterized in that a signal device (20) is provided for receiving from the LSI-circuit a pulse sequence, which indicates a predetermined functional condition such as an enabled gate and which triggers a corresponding indicating signal such as an audio signal or an optical signal in the signal device (20).

9. A system as claimed in any of the claims 1 to 8, characterized by a switch arrangement (21) for peripheral units, said switch arrangement triggering said peripheral units in response to a pulse sequence from the LSI-circuit (14, 15, 16).

10. A system as claimed in any of the claims 1 to 9, characterized by a feedback circuit provided between transmitter coupling element (17) and receiver coupling element (18) such that the binary-encoded control information supplied by the transmitter of the LSI-circuit (14, 15, 16) via the transmitter coupling element (17) is also supplied as a feedback signal via the receiver coupling element (18) to the receiver of the LSI-circuit.

11. A system as claimed in claim 10, characterized by the following elements of the feedback circuit:

a) a short-circuit connection between transmitter coupling element (17) and control line (12),

b) an opto-electronic circuit, which is connected to the control line (12) and which supplies an optical signal to a photosensitive element (K1) of the receiver coupling element (18) in response to the short-circuit signal, said receiver coupling element supplying a corresponding feedback signal to the receiver of the LSI-circuit (14, 15, 16).

12. Use of the system as claimed in any of the claims 1 to 11 as a house intercommunication system including plural subscriber's sets and preferably at least one gate loudspeaker.

13. Use of the system as claimed in any of the claims 1 to 12 for triggering an alarm in cooperation with a sensor for triggering a signal indicating the start of office hours, a signal indicating a break, or a signal indicating the end of office hours, and the like.

**Revendications**

1. Installation pour la transmission d'informations à l'intérieur d'un immeuble, comprenant

a) plusieurs postes de correspondant reliés entre eux sans groupe d'arrivé central (TL1, TL2; SP1–SP4),

b) une alimentation en courant électrique,

c) la disposition en parallèle de tous les postes sur la voie de transmission (10, 12),

d) l'installation étant conçue de manière à ce que soit prévu sur chaque poste un circuit largement identique (14, 15, 16) sur lequel sont branchés les différents blocs fonctionnels tels que clavier de sélection ou autres dispositifs de sélection techniquement équivalents,

e) ces circuits étant reliés entre eux par un seul moyen de transmission des commandes (12) tel qu'un câble électrique, sur lequel sont intercalés des éléments de couplage (17, 18),

f) les différents postes étant codés selon leurs fonctions respectives par l'addition d'éléments de codage électriques (22),

g) les caractéristiques c) à e) permettant de traiter, de coder, de transmettre par l'intermédiaire de la voie de transmission, de recevoir, de décoder, et d'évaluer des informations ainsi que de commander les différents dispositifs faisant partie de l'installation tels que haut-parleur, sonnette, gâche électrique et dispositifs analogues, caractérisée par

h) la conception des cuircuits de construction identique en circuits hautement intégrés (14, 15, 16) comprenant les circuits partiels suivants:

I. un premier circuit ayant pour fonction de constater l'actionnement de touches de sélection ou l'état de détecteurs ou d'éléments de commutation, de coder l'information reçue, de transformer celle-ci en une séquence d'impulsions et de fournir au canal de commande de la voie de transmission, outre l'information reçue par l'intermédiaire de la touche, les données de commande correspondantes,

II. un deuxième circuit ayant pour fonction de recevoir du canal de commande (12) et d'évaluer les séquences d'impulsions contenant les informations de commande et de générer les signaux de commande correspondants destinés à un élément de section du canal de communication ou bien aux appareils de signalisation,

III. un troisième circuit ayant pour fonction de lire dans les séquences d'impulsions reçues du canal de commande (12) les adresses des postes et de vérifier si ces adresses concordent avec la propre adresse,

i) la disposition de l'élément de section destiné à la transmission de la parole (19) entre le circuit hautement intégré (14, 15, 16) et le moyen de transmission (10),

j) deux éléments de couplage (17, 18), intercalés entre la ligne de commande (12) et le circuit hautement intégré (14, 15, 16) de chaque poste, ayant pour fonction la transmission de signaux de commande en code binaire,

k) plusieurs canaux de sélection de la voie de retransmission de la parole (10) prévue en plus du canal de commande unique (12), chaque poste étant automatiquement commuté sur la voie libre la plus proche si le canal de retransmission de la parole choisi est occupé.

2. Installation pour la transmission d'informations à l'intérieur d'un immeuble selon la revendication 1, caractérisé par un programme de commande intégré dans le circuit hautement intégré (14, 15, 16) de chaque poste.

3. Installation pour la transmission d'informations à l'intérieur d'un immeuble selon la revendication 2, caractérisée par un circuit standard pour le circuit hautement intégré (14, 15, 16) doté d'un rythmeur et d'un circuit de rappel.

4. Installation pour la transmission d'informations à l'intérieur d'un immeuble selon l'une des revendication 1 à 3, caractérisée en ce que des dispositifs sont prévus à chaque poste permettant de détecter, de constater et de mémoriser le statut de la ligne de commande, du clavier de sélection et du champ de détection.

5. Installation pour la transmission d'informations à l'intérieur d'un immeuble selon l'une des revendications 1 à 4, caractérisée par des dispositifs de verrouillage prévus sur chaque poste (TL1, TL2; SP1–SP4) permettant, si une communication est établie pour un poste déterminé, de bloquer la communication pour une partie ou la totalité des autres postes.

6. Installation pour la transmission d'informations à l'intérieur d'un immeuble selon l'une des revendications 1 à 5, caractérisée en ce que les éléments de couplage (17, 18) reçoivent du circuit hautement intégré (14, 15, 16), de préférence un microordinateur, une séquence d'impulsions dont les écarts correspondent à l'information de commande à transmettre et retransmettent au canal de commande (12) une fréquence à déclenchement correspondant aux intervalles divergents des impulsions ou bien, dans l'ordre inverse, retransmettent au circuit hautement intégré (14, 15, 16) une séquence d'impulsions correspondant à la fréquence à déclenchement reçue du canal de commande.

7. Installation pour la transmission d'informations à l'intérieur d'un immeuble selon l'une des revendications 1 à 6, caractérisée par un élément de section de la voie de transmission de la parole (19) intercalé entre le circuit hautement intégré (14, 15, 16) et la voie de transmission de la parole (10) ayant pour fonction de sélectionner une ligne de retransmission libre sur la base des impulsions de commande fournies par le circuit hautement intégré.

8. Installation pour la transmission d'informations à l'intérieur d'un immeuble selon l'une des revendications 1 à 7, caractérisée en ce que est prévu un appareil de signalisation (20) qui, ayant reçu du circuit hautement intégré (14, 15, 16) une séquence d'impulsions caractérisant un certain état de fonctionnement comme par exemple un portail ouvert, déclenche dans l'appareil de signalisation (20) un signal optique ou acoustique.

9. Installation pour la transmission d'informations à l'intérieur d'un immeuble selon l'une des revendications 1 à 8, caractérisée par une disposition d'actionneurs (21) pour appareils périphériques qui, commandés par une séquence d'impulsions provenant du circuit hautement intégré (14, 15, 16), déclenchent des appareils périphériques.

10. Installation pour la transmission d'informations à l'intèrieur d'un immeuble selon l'une des revendications 1 à 9, caractérisée par un circuit à réaction placé entre l'élément de couplage émetteur (17) et l'élément de couplage récepteur (18) de sorte que l'information de commande en code binaire, fournie par l'émetteur du circuit hautement intégré (14, 15, 16) par l'intermédiaire de l'élément de couplage-émetteur (17) au canal de commande, soit également fournie au récepteur du circuit hautement intégré sous forme de signal à réaction pour l'intermédiaire de l'élément de couplage récepteur.

11. Installation pour la transmission d'informations à l'intèrieur d'un immeuble selon la revendication 10, caractérisée par les éléments suivants du circuit à réaction:

a) une liaison en court-circuit entre l'élément de couplage émetteur (17) et la ligne de commande (12),
b) un circuit opto-électrique raccordé à la ligne de commande (12) fournissant un signal optique correspondant au signal de court-circuit à un élément sensible à la lumière (K1) de l'élément de couplage récepteur, qui à son tour fournit un signal rétroactif correspondant au récepteur du circuit hautement intégré (14, 15, 16).

12. Utilisation de l'installation pour la transmission d'informations à l'intérieur d'un immeuble selon l'une des revendications 1 à 11 comme interphone à postes multiples avec de préférence au moins un haut-parleur de portail d'entrée.

13. Utilisation de l'installation pour la transmission d'informations à l'intérieur d'un immeuble selon l'une des revendications 1 à 12 pour déclencher une alarmé, avec la coopération d'un détecteur permettant de déclencher un signal de début ou de fin de service, de pause ou analogue.

Fig: 1

0 032 982

Fig: 2a

0 032 982

```
        ┌─────────────────┐
        │  Informations-  │
        │     empfang      │
        └────────┬────────┘
                 │
        ┌────────▼────────┐
        │  Ende des        │
        │  Startimpulses   │
        │  feststellen     │
        └────────┬────────┘
                 │◄──────────────────────┐
        ┌────────▼────────┐              │
        │  Ende des        │              │
        │  Syn. Impulses   │              │
        │  feststellen     │              │
        └────────┬────────┘              │
                 │                        │
        ┌────────▼────────┐              │
        │  Bestimmen der   │              │
        │  Zeit zwischen   │              │
        │  2 Syn. Impulsen │              │
        └────────┬────────┘              │
                 │                        │
               ◇─▼─◇                      │
   Zeit = Z1 ◄─◇ Prüfen ◇                 │
        │       ◇ der Zeitdauer ◇         │
        │        ◇───▼───◇                │
        │            │ Zeit = 1T          │
        │            │                    │
┌───────▼───────┐   ┌▼──────────────┐    │
│  Abspeichern  │   │  Abspeichern   │    │
│  einer "1"    │   │  einer 0       │    │
└───────┬───────┘   └────────┬──────┘    │
        │                    │            │
        └──────────►─────────┤            │
                             │            │
                          ◇──▼──◇  nein   │
                          ◇ Gesamtes ◇────┘
                          ◇ Datenwort ◇
                          ◇ empfangen? ◇
                          ◇───▼───◇
                              │ ja
                     ┌────────▼────────┐
                     │  Ende des        │
                     │  Informations-   │
                     │  empfang         │
                     └─────────────────┘
```

Fig : 2b

17

Fig. 2c

Syn: Synchronisations – Impuls

$T \; \hat{=} \; "0"$

$2T \hat{=} \; "1"$

Fig. 3

0 032 982

Fig: 4a

12  Steuerleitung
10  Sprachübertragungsleitung
11  Versorgungsleitung

0 032 982

Fig. 4b

- 12  Steuerleitung
- 10  Sprachübertragungsleitung
- 11  Versorgungsleitung

für Türöffner

0 032 982